# EUROPÄISCHE PATENTSCHRIFT

(11) **EP 4 507 914 B1**
(45) Veröffentlichungstag und Bekanntmachung des Hinweises auf die Patenterteilung: **04.11.2026**
(21) Anmeldenummer: 23710295.9
(22) Anmeldetag: 07.03.2023
(51) Int. Cl.: B60K 35/00, B60K 35/22, B60K 35/10, B60K 35/65

(54) **SYSTEM UND VERFAHREN ZUR AUTOMATISIERTEN COCKPIT-EINSTELLUNG IN EINEM KRAFTFAHRZEUG**
SYSTEM AND METHOD FOR AUTOMATED COCKPIT ADJUSTMENT IN A MOTOR VEHICLE
SYSTÈME ET PROCÉDÉ DE RÉGLAGE AUTOMATISÉ DE POSTE DE CONDUITE DANS UN VÉHICULE À MOTEUR

(30) Priorität: 12.04.2022 DE 102022108977
(43) Veröffentlichungstag der Anmeldung: 19.02.2025
(73) Patentinhaber: AUDI AG, 85057 Ingolstadt (DE)
(72) Erfinder: AMBROSETTI, Sebastien, 86579 Waidhofen (DE); BOUAZIZ, Tahar, 85055 Ingolstadt (DE); DIEDERICHS, Lutz, 85092 Kösching (DE); FRÖBISCH, Sebastian, 85114 Tauberfeld (DE); HABERER, Marcus, 85309 Pörnbach (DE); KIEFERLE, Arnold, 85716 Unterschleißheim (DE); NEUMANN, Rebekka, 85080 Gaimersheim-Lippertshofen (DE); SCHEUER, Raphaela, 85055 Ingolstadt (DE); SCHINDHELM, Axel, 71711 Murr (DE); SCHNEID, Marcus, 85057 Ingolstadt (DE); SCHWARZ, Torsten, 85080 Gaimersheim (DE); SEIBEL, Katrin, 85134 Stammham (DE); WILLEMSEN, Sonja, 85055 Ingolstadt (DE); WÄCHTLER, Toni, 85301 Schweitenkirchen (DE)
(74) Vertreter: Hofstetter, Schurack & Partner
(86) Internationale Anmeldenummer: PCT/EP2023/055787
(87) Internationale Veröffentlichungsnummer: WO 2023/198365

(56) Entgegenhaltungen:
- CN-A- 112 298 059
- DE-B4- 102015 002 171
- DE-B4- 19 852 873
- US-A1- 2016 368 509

## Beschreibung

Die Erfindung betrifft ein Verfahren zur automatisierten Cockpit-Einstellung in einem Kraftfahrzeug, ein System, das dazu ausgebildet ist, das Verfahren durchzuführen, sowie ein Kraftfahrzeug mit einem solchen System.

In einem Kraftfahrzeug werden Cockpit-Einstellungen üblicherweise mithilfe von verschiedenen Bedienelementen vorgenommen, wie beispielsweise Sitzeinstellung, Lenkradeinstellung oder Spiegeleinstellung. Nachteilig bei der manuellen Einstellung dieser Vorrichtungen ist es, dass die richtige Einstellung dieser Vorrichtungen zeitaufwändig ist. Somit kann die korrekte Positionierung je nach Einschätzung beziehungsweise Erfahrung eines Benutzers die Positionierung sehr mühsam sein beziehungsweise nicht optimal durchgeführt werden. Dies kann zu Verspannungen oder einer schlechten Sicht nach außen oder auf die Anzeigen (z.B. Bildschirme) im Kraftfahrzeug führen.

Aus der DE 10 2008 037 073 A1 ist ein Verfahren zur fahrsituationsabhängigen Steuerung eines Rückspiegels bei einem Kraftfahrzeug bekannt. Das Verfahren umfasst als Schritte ein Erfassen eines erweiterten Nahbereichs rund um das Kraftfahrzeug, eine Messung des Abstandes zu Objekten, die sich im erweiterten Nahbereich befinden, eine Berechnung eines kritischen Objekts, das vorzugsweise den kürzesten geometrischen oder zeitlichen Abstand zwischen einem Objekt im Nahbereich und dem Kraftfahrzeug aufweist, und ein Einstellen des Rückspiegels derart, dass das kritische Objekt in den Sichtbereich des Fahrers rückt.

Aus der DE 199 33 769 A1 sind ein Verfahren und eine Anordnung zur individuellen und selbsttätigen Funktionseinstellung von Baugruppen eines Kraftfahrzeugs, insbesondere einer Sicherheit des Fahrers dienenden Baugruppen auf Basis von fahrzeugspezifischen Kenndaten bekannt.

Aus der DE 100 03 220 A1 sind ein Verfahren sowie eine Einrichtung zur fahrer- beziehungsweise insassenspezifischen Einstellung des Sitzes und sitzplatzbezogene Aggregate in Kraftfahrzeugen bekannt. Um hierbei eine Verbesserung der Anpassung an individuelle Ergonomie zu erreichen, ist vorgesehen, dass durch mindestens einmaliges Vermessen der zumindest wesentlichen Punkte der Gesamtstatur eines Fahrers strukturbezogene Daten ermittelt und auf einem Speichermedium abgespeichert werden, und dass durch Einlesen dieser Daten und Einbeziehung der Abmessungsdaten im Kraftfahrzeug daraufhin die Sitzkontureinstellung und/oder die Spiegel- und Lenkradeinstellung ergonomisch optimiert und automatisch eingestellt werden.

Aus der DE 10 2015 002 171 B4 ist ein Verfahren zum Unterstützen eines Benutzers beim Führen eines Kraftfahrzeugs bekannt. Das Verfahren umfasst als Schritte in Abhängigkeit von einem Verstellsignal ein Verstellen einer Anzeigeeinrichtung einer Fahrassistenzvorrichtung aus einer Ruhestellung, in welcher die Anzeigeeinrichtung nicht von einem Benutzer sichtbar ist, in eine Gebrauchsstellung, in der die Anzeigeeinrichtung in einem Sichtfeld des Benutzers liegt, durch eine Verstelleinrichtung der Fahrassistenzvorrichtung; und ein Ausgeben einer Bedienempfehlung durch die Anzeigeeinrichtung. Des Weiteren umfasst das Verfahren ein Empfangen eines von einer Bedieneinrichtung des Kraftfahrzeugs erzeugten Aktivierungssignals, das einen Benutzerwunsch des Benutzers signalisiert, in Abhängigkeit von dem Aktivierungssignal Erzeugen des Verstellsignals, sowie ein Ermitteln eines Sollwertes eines Steuerparameters eines Kraftfahrzeugsystems, ein Empfangen eines Istwerts des Steuerparameters, ein Vergleichen des Istwerts mit dem Sollwert, und anhand eines Ergebnisses des Vergleichs ein Ermitteln der Bedienempfehlung zum Betreiben des Kraftfahrzeugsystems und damit zum Führen des Kraftfahrzeugs. Weiterhin umfasst das Verfahren ein Empfangen eines Positionssignals einer Sensoreinrichtung des Kraftfahrzeugs, wobei das Positionssignal eine Augenposition und/oder eine Blickrichtung des Benutzers beschreibt, wobei das Erzeugen des Verstellsignals in Abhängigkeit von dem empfangenen Positionssignal erfolgt, wobei das Verstellsignal in Abhängigkeit von der beschriebenen Augenposition und/oder der beschriebenen Blickrichtung die Gebrauchsstellung vorgibt.

Aus der CN 112298059 A ist eine Vorrichtung zur Einstellung eines in einem Fahrzeug montierten Bildschirms und ein Fahrzeug bekannt.

Aus der DE 198 52 873 B4 ist eine Vorrichtung zur Einstellung wenigstens einer optischen Einrichtung eines Fahrzeugs bekannt.

Aus der US 2016/0368509 A1 ist ein Verfahren zum Einstellung einer Position einer Komponente eines Fahrzeugs bekannt.

Die Aufgabe der vorliegenden Erfindung ist es, eine Cockpit-Einstellung in einem Kraftfahrzeug zu vereinfachen und/oder zu verbessern.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Durch die Erfindung ist ein Verfahren zur automatisierten Cockpit-Einstellung in einem Kraftfahrzeug bereitgestellt. Das Verfahren umfasst als Schritte ein Erfassen einer Augenposition eines Fahrers im Kraftfahrzeug durch eine Fahrerbeobachtungskamera, ein Bestimmen einer optimierten Cockpit-Einstellung anhand der erfassten Augenposition, wobei die optimierte Cockpit-Einstellung zumindest eine in Abhängigkeit von der Augenposition vorbestimmte Positionseinstellung eines lageverstellbaren Anzeigebildschirms umfasst, und ein Durchführen der optimierten Cockpit-Einstellung, wobei zumindest der lageverstellbare Anzeigebildschirm in die vorbestimmte Positionseinstellung eingestellt wird.

Mit anderen Worten wird zunächst durch eine Fahrerbeobachtungskamera eine Augenposition ermittelt beziehungsweise Augenpunkterfassung eines Fahrers durchgeführt. Die Fahrerbeobachtungskamera kann vorzugsweise eine Stereokamera, Time-of-Flight-Kamera und/oder mehrere Linsen beziehungsweise Fokalpunkte aufweisen, um die Augenposition in drei Dimensionen in dem Fahrgastraum zu ermitteln. Insbesondere kann eine Aufnahme der Fahrerbeobachtungskamera mittels eines Bildanalysealgorithmus analysiert werden, um die Augen in der Aufnahme zu erkennen und damit die Augenposition festzustellen. Vorzugsweise kann auch eine Blickrichtung ermittelt werden.

Anhand der ermittelten Augenposition kann anschließend, insbesondere durch ein Steuergerät, eine für die Augenposition optimierte Cockpit-Einstellung bestimmt werden, wobei die optimierte Cockpit-Einstellung zumindest eine dafür vorbestimmte Positionseinstellung eines lageverstellbaren Anzeigebildschirms aufweist. Der lageverstellbare Anzeigebildschirm kann ein Fahrerinformationsdisplay (FID), ein Centerinformationsdisplay (CID) und/oder ein Head-up-Display (HUD) sein, wobei der Anzeigebildschirm durch geeignete Ansteuermittel in unterschiedliche Positionen gebracht werden kann. Beispielsweise kann ein Centerinformationsdisplay über Elektromotoren in seiner Höhenrichtung, Seitenrichtung und/oder Längsrichtung verstellt werden. Die jeweilige Positionseinstellung des Anzeigebildschirms kann für die jeweilige Augenposition vorbestimmt sein, insbesondere bezüglich einer Ergonomie.

Nachdem die optimierte Cockpit-Einstellung bestimmt wurde, kann beispielsweise durch das Steuergerät, der lageverstellbare Anzeigebildschirm angesteuert werden, so dass sich dieser in die vorbestimmte Positionseinstellung bewegt.

Für die automatisierte Cockpit-Einstellung können vorzugsweise auch weitere Parameter berücksichtigt werden, wie beispielsweise eine Fahrergröße, eine Lenkradeinstellung und/oder eine Sitzeinstellung, um die optimale Position des Anzeigebildschirms und/oder weiterer Vorrichtungen im Cockpit vorzunehmen. Vorzugsweise kann nach der automatisierten Cockpit-Einstellung, die Einstellung des Anzeigebildschirms auch manuell nachjustiert werden.

Durch die Erfindung ergibt sich der Vorteil, dass die Cockpit-Einstellung, insbesondere die Einstellung des lageverstellbaren Anzeigebildschirms, schnell und automatisiert durchgeführt werden kann, insbesondere unter Berücksichtigung ergonomischer Gesichtspunkte.

Die Erfindung umfasst auch Ausführungsformen, durch die sich zusätzliche Vorteile ergeben.

Eine Ausführungsform sieht vor, dass der lageverstellbare Anzeigebildschirm zumindest in einer Höhenrichtung und/oder Längsrichtung des Kraftfahrzeugs eingestellt wird. Das heißt, dass der Anzeigebildschirm zumindest in einer z-Richtung des Kraftfahrzeugs und/oder einer x-Richtung des Kraftfahrzeugs bewegt werden kann, um eine optimale Sicht ausgehend von der erfassten Augenposition zu gewährleisten. Alternativ oder zusätzlich kann der Anzeigebildschirm auch in einer Seitenrichtung (y-Richtung) verstellt werden und/oder in einer oder mehreren Richtungen gekippt werden. Die Bewegung des Anzeigebildschirms kann dabei beispielsweise mittels Elektromotoren durchgeführt werden.

Eine weitere Ausführungsform sieht vor, dass die optimierte Cockpit-Einstellung zusätzlich anhand einer vorgegebenen Fahrergröße durchgeführt wird. Die Fahrergröße kann für einen Fahrer des Kraftfahrzeugs hinterlegt sein, wobei aus der Fahrergröße neben einem optimierten Blickwinkel auf den Anzeigebildschirm auch Ableitungen zur Erreichbarkeit von Eingabeelementen auf dem Anzeigebildschirm getroffen und diese optimiert werden kann. Des Weiteren können anhand der vorgegebenen Fahrergröße auch weitere Cockpit-Einstellungen vorgenommen werden.

Vorzugsweise ist vorgesehen, dass basierend auf der erfassten Augenposition und der Fahrergröße zusätzlich eine Lenkradposition und/oder Sitzposition eingestellt wird. So kann neben dem Anzeigebildschirm auch das Lenkrad in der Höhenrichtung und/oder Längsrichtung des Kraftfahrzeugs verstellt werden, vorzugsweise um eine gute Erreichbarkeit für den Fahrer zu erhalten und/oder um einen Blick auf das Fahrerinformationsdisplay/Kombiinstrument anhand der Augenposition zu optimieren. Alternativ oder zusätzlich kann die Sitzposition, das heißt die Höhenrichtung und/oder Längsrichtung und/oder Sitzlehnenneigung anhand vorgegebener optimierter Cockpit-Einstellungen eingestellt werden. Hierdurch kann die Ergonomie weiter verbessert werden, indem das Lenkrad und/oder der Sitz automatisiert eingestellt werden.

In einer weiteren Ausführungsform ist vorgesehen, dass basierend auf der erfassten Augenposition ein Innenspiegel und/oder Außenspiegel eingestellt werden. Vorzugsweise können auch virtuelle Außenspiegel vorgesehen sein, deren Position anhand der erfassten Augenposition angepasst wird. Durch diese Ausführungsform ergibt sich der Vorteil, dass eine Ergonomie und auch eine Sicherheit verbessert werden können, da automatisiert die optimierte Einstellung der Spiegel vorgenommen werden kann.

Eine weitere Ausführungsform sieht vor, dass eine grafische Benutzeroberfläche des Anzeigebildschirms und/oder zumindest eines weiteren Bildschirms im Kraftfahrzeug anhand der erfassten Augenposition eingestellt wird. Das bedeutet, dass auch die grafische Benutzeroberfläche, die auf dem jeweiligen Bildschirm angezeigt werden kann, in ihrer Position und Darstellung auf dem Bildschirm dahingehend verändert wird, die für die erfasste Augenposition optimiert ist. Damit kann eine Sichtbarkeit der grafischen Benutzeroberfläche und/oder eine Bedienbarkeit der grafischen Benutzeroberfläche an die erfasste Augenposition angepasst werden.

Eine weitere Ausführungsform sieht vor, dass individualisierte Cockpit-Einstellungen in einem Benutzerprofil abgespeichert werden, wobei mittels der Fahrerbeobachtungskamera eine Gesichtserkennung durchgeführt wird und in Abhängigkeit der Gesichtserkennung die individualisierten Cockpit-Einstellungen abgerufen werden. Individualisierte Cockpit-Einstellungen können manuell vorgenommene Änderungen sein, die nach Einstellung der automatisierten und optimierten Cockpit-Einstellung vorgenommen werden. Diese können in einem jeweiligen Benutzerprofil abgespeichert werden, das mit einem Gesicht des Benutzers verknüpft sein kann. Die Fahrerbeobachtungskamera kann bei Erkennen dieses Gesichts das Benutzerprofil abrufen und somit die individualisierte Cockpit-Einstellung anbieten und/oder automatisiert durchführen. Somit kann Zeit gespart werden, da individualisierte Einstellungen schnell und einfach erhalten werden können.

Vorzugsweise ist vorgesehen, dass mittels der erfassten Augenposition überprüft wird, ob die individualisierte Cockpit-Einstellung von der optimierten Cockpit-Einstellung abweicht, wobei eine Benachrichtigung ausgegeben wird, falls die individualisierte Cockpit-Einstellung von der optimierten Cockpit-Einstellung abweicht. Das heißt, dass, falls die individualisierte Cockpit-Einstellung von den ergonomisch optimierten Einstellungen abweicht, kann das mittels der erfassten Augenposition erkannt werden und ein Benutzer kann darauf aufmerksam gemacht werden, insbesondere durch eine Benachrichtigung, in der angeboten wird, eine Optimierung vorzunehmen. Diese kann dann mittels einer Bestätigung durchgeführt werden.

Ein weiterer Aspekt der Erfindung betrifft ein System zur automatisierten Cockpit-Einstellung, mit einer Fahrerbeobachtungskamera, die zum Erfassen einer Augenposition ausgebildet ist, und einem Steuergerät, das dazu ausgebildet ist, anhand der erfassten Augenposition eine optimierte Cockpit-Einstellung zu bestimmen, die zumindest eine in Abhängigkeit von der Augenposition vorbestimmte Positionseinstellung eines lageverstellbaren Anzeigebildschirms umfasst. Des Weiteren ist das Steuergerät dazu ausgebildet, ein Steuersignal zum Durchführen der optimierten Cockpit-Einstellung zu erzeugen und damit zumindest den lageverstellbaren Anzeigebildschirm zum Einstellen in die vorbestimmte Positionseinstellung anzusteuern. Hierbei ergeben sich gleiche Vorteile und Variationsmöglichkeiten wie bei dem Verfahren.

Erfindungsgemäß ist auch ein Kraftfahrzeug mit einem solchen System vorgesehen. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Systems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems hier nicht noch einmal beschrieben.

Als eine weitere Lösung umfasst die Erfindung auch ein computerlesbares Speichermedium, umfassend Befehle, die bei der Ausführung durch einen Computer oder einen Computerverbund diesen veranlassen, eine Ausführungsform des erfindungsgemäßen Verfahrens auszuführen. Das Speichermedium kann z.B. zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) ausgestaltet sein. Durch den Computer oder Computerverbund kann eine Prozessorschaltung mit zumindest einem Mikroprozessor bereitgestellt sein. Die Befehle können als Binärcode oder Assembler und/oder als Quellcode einer Programmiersprache (z.B. C) bereitgestellt sein.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisch dargestelltes Kraftfahrzeug gemäß einer beispielhaften Ausführungsform;
- Fig. 2: eine schematisch dargestellte Cockpit-Ansicht gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

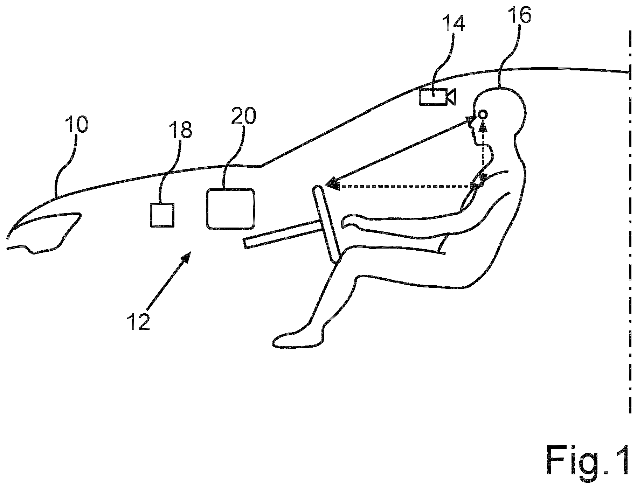

In Fig. 1 ist ein Kraftfahrzeug 10 mit einem System 12 zur automatisierten Cockpit-Einstellung gemäß einer beispielhaften Ausführungsform dargestellt. Das System 12 umfasst eine Fahrerbeobachtungskamera 14, die dazu ausgebildet ist, eine Augenposition eines Fahrers 16 in einem Fahrgastraum des Kraftfahrzeugs 10 zu ermitteln. Dazu kann die Fahrerbeobachtungskamera 14 auf den Fahrer 16 gerichtet sein und vorzugsweise über eine Fokalpunkteinstellung die Augenposition in einer Tiefenebene bestimmen und zusätzlich dazu in der Flächenebene. Alternativ oder zusätzlich kann auch eine Stereokamera als Fahrerbeobachtungskamera vorgesehen sein, durch die eine Tiefeninformation erhalten werden kann.

Die erfasste Augenposition kann durch ein Steuergerät 18 des Kraftfahrzeugs 10 ausgewertet werden, wobei anhand der Augenposition und vorzugsweise mithilfe einer vorgegebenen Fahrergröße eine optimierte Cockpit-Einstellung bestimmt wird, mittels der verschiedene lageverstellbare Vorrichtungen im Kraftfahrzeug 10 optimiert werden können, vorzugsweise hinsichtlich einer Ergonomie. Insbesondere kann bei der optimierten Cockpit-Einstellung und in Abhängigkeit von der Augenposition zumindest eine vorbestimmte Positionseinstellung eines lageverstellbaren Anzeigebildschirms 20 ermittelt werden. Mit anderen Worten kann anhand der ermittelten Augenposition die Positionseinstellung des Anzeigebildschirms 20 ermittelt werden, die die beste und ergonomischste Sicht auf den Anzeigebildschirm 20 ermöglicht, wobei diese für jede Augenposition vorbestimmt sein kann. Der Anzeigebildschirm 20 kann beispielsweise ein Fahrerinformationsdisplay, ein Centerinformationsdisplay und/oder ein Head-up-Display sein.

In diesem Ausführungsbeispiel kann anhand der Augenposition und vorzugsweise mit Hilfe der bekannten Fahrergröße und einer Lenkradeinstellung der optimale Blickwinkel auf den Anzeigebildschirm 20 ermittelt werden. Das Steuergerät 18, dass die Aufnahme der Fahrerbeobachtungskamera 14 empfängt und auswertet, kann dann in Abhängigkeit der Augenposition Positionierungsmittel (nicht gezeigt) des Anzeigebildschirms 20, wie beispielsweise Elektromotoren, ansteuern, um den Anzeigebildschirm 20 in die optimierte Positionseinstellung zu bringen.

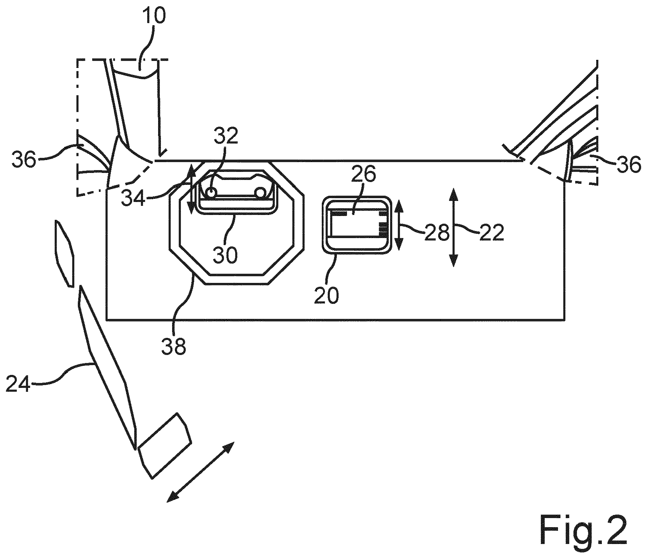

Zusätzlich zu dem lageverstellbaren Anzeigebildschirm 20 können auch weitere Vorrichtungen im Cockpit anhand zumindest der erfassten Augenposition eingestellt werden, was beispielsweise in Fig. 2 dargestellt ist.

Die Fig. 2 zeigt eine schematische Cockpit-Ansicht auf ein Armaturenbrett des Kraftfahrzeugs 10, wobei die jeweiligen Doppelpfeile Verstellwege jeweiliger Cockpitvorrichtungen anzeigen. Wie bereits in der vorhergehenden Fig. erläutert, kann beispielsweise der Anzeigebildschirm 20, der in dieser Fig. als Centerinformationsdisplay 20 dargestellt ist, entlang eines Verstellwegs 22 in seiner Höhenrichtung verstellt werden. Alternativ oder zusätzlich kann das Centerinformationsdisplay 20 auch in der Fahrzeuglängsrichtung verstellt werden oder um eine Achse, vorzugsweise in Richtung eines Fahrersitzes 24. Besonders bevorzugt kann auch eine grafische Benutzeroberfläche 26, die im Centerinformationsdisplay 20 angezeigt werden kann, anhand der erfassten Augenposition innerhalb des Centerinformationsdisplays 20 verschoben, vergrößert oder verkleinert werden, um eine optimierte Sicht und/oder eine optimierte Erreichbarkeit auf die grafische Benutzeroberfläche 26 zu ermöglichen. Beispielsweise kann die grafische Benutzeroberfläche 26 entlang des Verstellwegs 28 auf dem Anzeigebildschirm 20 verschoben werden.

In gleicher Weise kann ein Fahrerinformationsdisplay 30 und eine darauf angezeigte grafische Benutzeroberfläche 32 entlang eines Verstellwegs 34 von der grafischen Benutzeroberfläche 32 des Fahrerinformationsdisplays 30 verstellt werden. Des Weiteren können Außenspiegel 36 und eine Positionseinstellung des Fahrersitzes 24 und/oder des Lenkrads 38 in Abhängigkeit von der erfassten Augenposition eingestellt werden.

Zusätzlich zu der automatisierten Cockpit-Einstellung kann auch eine individualisierte Cockpit-Einstellung für die vorgenannten Vorrichtungen manuell durchgeführt werden, wobei die individualisierten Cockpit-Einstellungen in einem Benutzerprofil abgespeichert werden können. Hierbei kann vorzugsweise mittels der Fahrerbeobachtungskamera 14 das ein Gesicht zu dem Benutzerprofil zugeordnet werden, wobei die Fahrerbeobachtungskamera 14 mittels einer Gesichtserkennung die individualisierte Cockpit-Einstellung bei Erkennen des Gesichts abrufen und anbieten beziehungsweise durchführen kann. Besonders bevorzugt ist vorgesehen, dass die individualisierte Cockpit-Einstellung anhand der erfassten Augenposition im Nachhinein analysiert werden kann, wobei eine Benachrichtigung für eine Optimierung der Cockpit-Einstellung ausgegeben werden kann, falls die erfasste Augenposition nicht für die Cockpit-Einstellung optimiert ist.

In einem weiteren beispielhaften Aspekt ist vorgesehen, dass das Kraftfahrzeug 10 mit einem oder mehreren Displays 20, 30 ausgestattet ist. Vor dem Fahrer 16 erfasst eine Fahrerbeobachtungskamera 14 den Augenpunkt von dem Fahrer 16, vorzugsweise abhängig von einer Fahrergröße und einer Sitzposition. Vorzugsweise verfügt die Fahrerbeobachtungskamera 14 über mehrere Linsen beziehungsweise Fokalpunkte für eine noch akkuratere Erfassung. Des Weiteren kann die Fahrerbeobachtungskamera 14 auch bedeutende Veränderungen von einem Blickwinkel des Fahrers 16, beispielsweise in der Längsachse, erfassen.

Über ein Steuergerät 18 sind verschiedene Komponenten des Cockpits, wie beispielsweise die Anzeigebildschirme 20, 30, Außenspiegel 36, ein Fahrersitz 24 und/oder ein Lenkrad 38 mit der Fahrerbeobachtungskamera 14 verknüpft, wobei über das Steuergerät 18 auch eine Personalisierung der Cockpit-Einstellungen vorgenommen werden kann.

Des Weiteren kann das Kraftfahrzeug 10 über eine grafische Benutzeroberfläche 26, 30 mit responsivem Design verfügen, beispielsweise im Fahrerinformationsdisplay 30, im Centerinformationsdisplay 20 und/oder einem Head-up-Display, wobei eine Skalierbarkeit der grafischen Benutzeroberfläche auf dem jeweiligen Anzeigebildschirm in Abhängigkeit von der Augenposition eingestellt werden kann.

Insgesamt zeigen die Beispiele, wie durch die Erfindung eine automatisierte und personalisierte Cockpit-Einstellung basierend auf einer Augenpunkterfassung durchgeführt werden kann.

## Patentansprüche

1. Verfahren zur automatisierten Cockpit-Einstellung in einem Kraftfahrzeug (10), mit den Schritten:
- Erfassen einer Augenposition eines Fahrers (16) im Kraftfahrzeug (10) durch eine Fahrerbeobachtungskamera (14);
- Bestimmen einer optimierten Cockpit-Einstellung anhand der erfassten Augenposition, wobei die optimierte Cockpit-Einstellung zumindest eine in Abhängigkeit von der Augenposition vorbestimmte Positionseinstellung eines lageverstellbaren Anzeigebildschirms (20, 30) umfasst;
- Durchführen der optimierten Cockpit-Einstellung, wobei zumindest der lageverstellbare Anzeigebildschirm (20, 30) in die vorbestimmte Positionseinstellung eingestellt wird;
**dadurch gekennzeichnet, dass**
- zusätzlich eine graphische Benutzeroberfläche (26, 32) des Anzeigebildschirms (20) und/oder zumindest eines weiteren Bildschirms (30) im Kraftfahrzeug (10) anhand der erfassten Augenposition eingestellt wird;
- wobei die graphische Benutzeroberfläche (26, 32) in ihrer Position und Darstellung auf dem Anzeigebildschirm (20) verändert wird.

2. Verfahren nach Anspruch 1, wobei der lageverstellbare Anzeigebildschirm (20, 30) zumindest in einer Höhenrichtung und/oder Längsrichtung des Kraftfahrzeugs (10) eingestellt wird.

3. Verfahren nach einem der vorhergehenden Ansprüche, wobei die optimierte Cockpit-Einstellung zusätzlich anhand einer vorgegebenen Fahrergröße durchgeführt wird.

4. Verfahren nach Anspruch 3, wobei basierend auf der erfassten Augenposition und der Fahrergröße zusätzlich eine Lenkradposition und/oder Sitzposition eingestellt wird.

5. Verfahren nach einem der vorhergehenden Ansprüche, wobei basierend auf der erfassten Augenposition ein Innenspiegel und/oder Außenspiegel (36) eingestellt werden.

6. Verfahren nach einem der vorhergehenden Ansprüche, wobei individualisierte Cockpit-Einstellungen in einem Benutzerprofil abgespeichert werden, wobei mittels der Fahrerbeobachtungskamera (14) eine Gesichtserkennung durchgeführt wird und in Abhängigkeit der Gesichtserkennung die individualisierten Cockpit-Einstellungen aufgerufen werden.

7. Verfahren nach Anspruch 6, wobei mittels der erfassten Augenposition überprüft wird, ob die individualisierte Cockpit-Einstellung von der optimierten Cockpit-Einstellung abweicht, wobei eine Benachrichtigung ausgegeben wird, falls die individualisierte Cockpit-Einstellung von der optimierten Cockpit-Einstellung abweicht.

8. System (12) zur automatisierten Cockpit-Einstellung, mit einer Fahrerbeobachtungskamera (14), die zum Erfassen einer Augenposition ausgebildet ist, und einem Steuergerät (18), das dazu ausgebildet ist, anhand der erfassten Augenposition eine optimierte Cockpit-Einstellung zu bestimmen, die zumindest eine in Abhängigkeit von der Augenposition vorbestimmte Positionseinstellung eines lageverstellbaren Anzeigebildschirms (20, 30) umfasst, und ein Steuersignal zum Durchführen der optimierten Cockpit-Einstellung zu erzeugen, durch das zumindest der lageverstellbare Anzeigebildschirm (20, 30) in die vorbestimmte Positionseinstellung eingestellt wird; **dadurch gekennzeichnet, dass**
durch das Steuersignal zusätzlich eine graphische Benutzeroberfläche (26, 32) des Anzeigebildschirms (20) anhand der erfassten Augenposition eingestellt wird, wobei die graphische Benutzeroberfläche (26, 32) in ihrer Position und Darstellung auf dem Anzeigebildschirm (20) verändert wird.

9. Kraftfahrzeug (10) mit einem System (12) nach Anspruch 8.

## Claims

1. A method for the automated cockpit adjustment in a motor vehicle (10), comprising the steps of:
- capturing an eye position of a driver (16) in the motor vehicle (10) by a driver observation camera (14);
- determining an optimized cockpit adjustment based on the captured eye position, wherein the optimized cockpit adjustment includes at least one position adjustment, predetermined depending on the eye position, of a display screen (20, 30) adjustable in position;
- performing the optimized cockpit adjustment, wherein at least the display screen (20, 30) adjustable in position is adjusted into the predetermined position adjustment;
**characterized in that**
- a graphical user interface (26, 32) of the display screen (20) and/or of at least one further screen (30) in the motor vehicle (10) is additionally adjusted based on the captured eye position;
- wherein the graphical user interface (26, 32) is changed in its position and representation on the display screen (20).

2. The method according to claim 1, wherein the display screen (20, 30) adjustable in position is adjusted at least in a height direction and/or longitudinal direction of the motor vehicle (10).

3. The method according to any one of the preceding claims, wherein the optimized cockpit adjustment is additionally performed based on a preset driver height.

4. The method according to claim 3, wherein a steering wheel position and/or seat position are additionally adjusted based on the captured eye position and the driver height.

5. The method according to any one of the preceding claims, wherein an interior mirror and/or exterior mirror (36) are adjusted based on the captured eye position.

6. The method according to any one of the preceding claims, wherein individualized cockpit adjustments are stored in a user profile, wherein facial recognition is performed by means of the driver observation camera (14) and the individualized cockpit adjustments are retrieved depending on the facial recognition.

7. The method according to claim 6, wherein it is examined by means of the captured eye position if the individualized cockpit adjustment deviates from the optimized cockpit adjustment, wherein a message is output if the individualized cockpit adjustment deviates from the optimized cockpit adjustment.

8. A system (12) for the automated cockpit adjustment, with a driver observation camera (14), which is formed for capturing an eye position, and a control device (18), which is formed to determine an optimized cockpit adjustment based on the captured eye position, which includes at least one position adjustment, predetermined depending on the eye position, of a display screen (20, 30) adjustable in position, and to generate a control signal for performing the optimized cockpit adjustment, by which at least the display screen (20, 30) adjustable in position is adjusted into the predetermined position adjustment; **characterized in that**
a graphical user interface (26, 32) of the display screen (20) is additionally adjusted based on the captured eye position by the control signal, wherein the graphical user interface (26, 32) is changed in its position and representation on the display screen (20).

9. A motor vehicle (10) with a system (12) according to claim 8.

## Revendications

1. Procédé pour régler automatiquement un habitacle dans un véhicule à moteur (10), comportant les étapes consistant à :
- détecter une position des yeux d'un conducteur (16) dans le véhicule à moteur (10) par une caméra d'observation du conducteur (14) ;
- déterminer un réglage d'habitacle optimisé au moyen de la position détectée des yeux, le réglage d'habitacle optimisé comprenant au moins un réglage de position prédéfini d'un écran d'affichage à position réglable (20, 30) en fonction de la position des yeux ;
- effectuer le réglage d'habitacle optimisé, l'écran d'affichage à position réglable (20, 30) étant au moins réglé au réglage de position prédéfini ;
**caractérisé en ce qu'**
- une interface utilisateur graphique (26, 32) de l'écran d'affichage (20) et/ou au moins d'un écran supplémentaire (30) dans le véhicule à moteur (10) est de plus réglé au moyen de la position détectée des yeux ;
- l'interface utilisateur graphique (26, 32) étant changée dans sa position et sa présentation sur l'écran d'affichage (20).

2. Procédé selon la revendication 1, dans lequel l'écran d'affichage à position réglable (20, 30) est réglé au moins dans une direction de hauteur et/ou une direction longitudinale du véhicule à moteur (10).

3. Procédé selon l'une des revendications précédentes, dans lequel le réglage d'habitacle optimisé est de plus effectué au moyen d'une taille de conducteur prédéterminée.

4. Procédé selon la revendication 3, dans lequel une position de volant et/ou une position de siège est de plus réglée sur la base de la position détectée des yeux et de la taille du conducteur.

5. Procédé selon l'une des revendications précédentes, dans lequel un rétroviseur intérieur et/ou un rétroviseur extérieur (36) sont réglés sur la base de la position détectée des yeux.

6. Procédé selon l'une des revendications précédentes, dans lequel des paramètres d'habitacle personnalisés sont stockés dans un profil d'utilisateur, une reconnaissance faciale étant effectuée au moyen de la caméra d'observation du conducteur (14) et les réglages d'habitacle personnalisés de l'habitacle sont récupérés en fonction de la reconnaissance faciale.

7. Procédé selon la revendication 6, dans lequel la position détectée des yeux permet de vérifier si le réglage d'habitacle individualisé s'écarte du réglage d'habitacle optimisé, une notification étant envoyée si le réglage d'habitacle individualisé s'écarte du réglage d'habitacle optimisé.

8. Système (12) pour régler automatiquement un habitacle, comportant une caméra d'observation du conducteur (14) configurée pour détecter une position des yeux, et une commande (18) configurée pour déterminer un réglage optimisé de l'habitacle au moyen de la position détectée des yeux, comprenant au moins un réglage de position prédéterminé d'un écran d'affichage à position réglable (20, 30) en fonction de la position des yeux, et un signal de commande pour effectuer le réglage d'habitacle optimisé, par l'intermédiaire du au moins un écran d'affichage à position réglable (20, 30) au réglage de position prédéfini ;
**caractérisé en ce qu'**
une interface utilisateur graphique (26, 32) de l'écran d'affichage (20) est réglée par le signal de commande au moyen de la position détectée des yeux, l'interface utilisateur graphique (26, 32) étant changée dans sa position et sa représentation sur l'écran d'affichage (20).

9. Véhicule à moteur (10) ayant un système (12) selon la revendication 8.
